# EUROPEAN PATENT APPLICATION

(11) **EP 0 697 324 A1**
(43) Date of publication of application: **21.02.1996**
(21) Application number: 95305619.9
(22) Date of filing: 11.08.1995
(51) Int. Cl.: B62B 7/08

(54) **Foldable pushchair**

(30) Priority: 16.08.1994 GB 9416522
(71) Applicant: Crisp, David John, London E8 1DN (GB)
(72) Inventor: Crisp, David John, London E8 1DN (GB)
(74) Representative: Rickard, Timothy Mark Adrian

(57) **Abstract**

A foldable push-chair having front wheels carried by front legs (11) and rear wheels carried by rear legs (12), a link strut (50) pivotally carried between a front leg and a corresponding rear leg, a seat (100) pivotally mounted on the link strut (50) and a handle (40) for controlled wheeling of the push-chair pivotally mounted on the chair such that downward rotation of the handle causes rearward rotation of the seat about its pivotal mounting and reduction of the separation of the front and rear wheels.

## Description

This invention relates to pushchairs. More especially but not exclusively the invention relates to pushchairs for children.

Pushchairs are of course known but are a compromise between the requirements of safety to prevent accidental folding, expense and easy of use. The invention seeks to reduce the problems associated with prior art arrangements.

According to the invention there is provided a foldable push-chair having front wheels carried by front legs and rear wheels carried by rear legs, a link strut pivotally carried between a front leg and a corresponding rear leg, a seat pivotally mounted on the link strut and a handle for controlled wheeling of the push-chair pivotally mounted on the chair such that downward rotation of the handle causes rearward rotation of the seat about its pivotal mounting and reduction of the separation of the front and rear wheels.

Some embodiments of the invention are provided with over-centre locking device comprising a first arm secured to the seat and rotatable about the seat pivot and a second arm pivotally mounted on the first link and a front leg.

In some embodiments of the invention a seat back is pivotally mounted on the link strut. Detent means for adjusting the rake of the seat back may be provided.

Embodiments of the invention will be described, by way of non-limiting example, by reference to the accompanying figures of which:

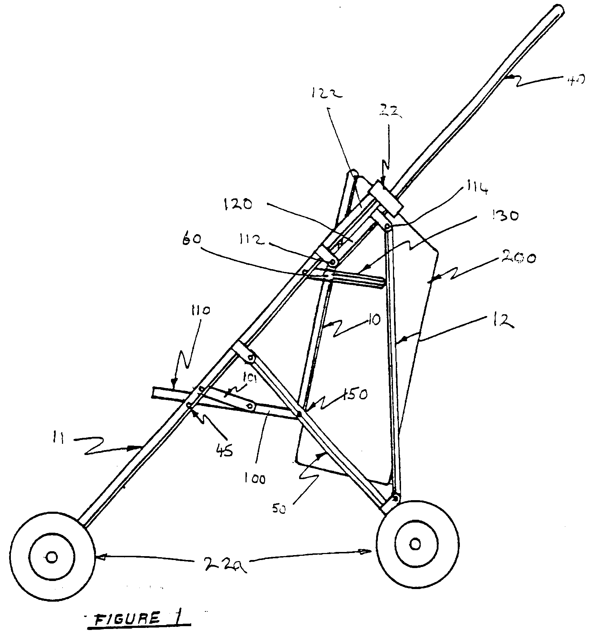

Figure 1 is a side view of an embodiment in an unfolded configuration, and
Figure 2 is a side view of the pushchair of Figure 1 partially folded.

The illustrated embodiment has a structure based on a wheeled frame having front and rear wheels. The frame is foldable into a collapsed state to reduce the spacing between the front and rear wheels so that the front to rear dimension of the pushchair is reduced. In the illustrated embodiment support member 10, desirably an inverted U shaped member is provided. Forwardly, support member 10 provides a part of, or support for, a chair and rearwardly provides support for a goods container 200. Support member 10 is located between a pair of wheeled front legs 11 and rear legs 12. As described hereinafter in more detail, a U shaped handle 40 links the legs 11,12 on one side to the legs 11,12 on the other side. Handle 40 allows for controlled wheeling of the unfolded pushchair. Optionally a further handle for example the top of support member 10 allows for controlled wheeling in the collapsed state.

A link strut 50 extends between a lower end of the rear leg 12 and an intermediate point on the adjacent front leg 11. An over-centre locking device comprising first and second arms 100,101 is optionally provided between link strut 50 and front leg 11. A seat 110 is pivotally mounted at its rear edge on the link strut 50. The seat is supported towards the front by a stop, for example a tubular member 45 extending between front legs 11. Tubular member 45 can also increase the rigidity of the chair. Where the over-centre locking device is provided first arm 100 and seat 110 conveniently pivot about the same point 150. If this is done it is preferred that the first arm 100 is secured to the seat 110.

The front legs 11 are pivotally mounted on the handle 40 as are the rear legs 12. A third arm 120 extends between the point 112 at which the front leg 11 is mounted on the handle 40 and the point 114 at which the rear legs 12 are mounted.

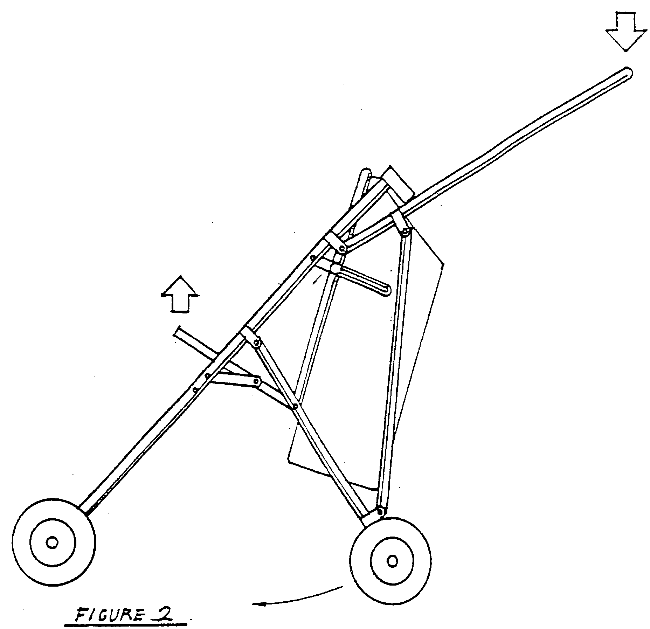

To fold the pushchair the over-centre locking device 100,101 or other lock, where fitted, is released. Where the seat is secured to the first arm 100 of the locking device this can be achieved by simply rotating the seat about its pivot for example by lifting the front edge of the seat. Rotation of the handle 40 in the direction of the arrow in Fig 2 about pivot point 112 causes the seat to rotate in the couter direction as seen in Fig 2 and reduces the spacing between the front and rear wheels in some cases until the front and rear legs are substantially parallel. To unfold the pushchair the handle 40 is rotated about pivot point 112 in the other direction. Where the link arm 100 is secured to the seat the locking device is actuated by unfolding.

To provide added security of the pushchair in the unfolded state further safety catches may be provided. For example a catch 22 may be provided between the third arm 120 and extension piece 122 of front leg 11. Optionally, and especially where the overcentre locking device is not fitted, a seat lock for example depending from the seat 100 and engaging tubular member 45 may be provided.

Preferably, the rake of the seat back is adjustable. One way of acheiving this is to pivot a notched, slotted arm 130 from a leg preferably the front leg. The seat back, in the illustrated embodiment U-shaped member 10, is provided with a resiliently biased detent 60. In the rest position the detent 60 is held either by a notch or the end of slot. When the detent is 60 biased away from its rest position it may be slid along the groove thus altering the rake. The released detent then engages a notch or the end of the slot and is held.

The design allows at least some embodiments to be used as a shopping trolley in the folded state. This allows erection and collapse without the need to disturb goods located in a goods container carried behind the seat. A suitable goods container 200 comprises a flexible bag for example having zip fasteners or other closure means to permit easy access to the interior. The container can be secured for example by straps (not shown) to support member 10. It should be appreciated however that since folding of the pushchair does not interfere with the goods container any convenient form of container could be used. It is not essential therefore that a flexible bag be used and for example a rigid box could be an alternative.

Although not shown in the drawings the chair, especially if for a child, would normally be provided with a releasable harness for securing the rider in the chair. Weather protection for example a parasol or a rain cover could be provided.

The upholstery of the seat could take many forms for example permanently attached padding or removable foam filled upholstery.

In some embodiments of the invention swivel wheels 22a capable of castoring about a vertical axis are provided.

In some embodiments of the invention a foot rest (not shown) is provided between the front legs 11. The foot rest can serve to stabilise the folded pushchair.

Those skilled in the art will have little difficulty in devising modifications.

## Claims

1. A foldable push-chair having front wheels carried by front legs and rear wheels carried by rear legs, a link strut pivotally carried between a front leg and a corresponding rear leg, a seat pivotally mounted on the link strut and a handle for controlled wheeling of the push-chair pivotally mounted on the chair such that downward rotation of the handle causes rearward rotation of the seat about its pivotal mounting and reduction of the separation of the front and rear wheels.

2. A foldable pushchair as claimed in claim 1, further comprising an over-centre locking device comprising a first arm secured to the seat and rotatable about the seat pivot and a second arm pivotally mounted on the first link and a front leg.

3. A foldable push-chair as claimed in claim 1 or claim 2, wherein a seat back is pivotally mounted on the link strut.

4. A foldable push-chair as claimed in claim 3 provided with detent means for adjusting the rake of the seat back.
